# EUROPÄISCHE PATENTSCHRIFT

(11) **EP 2 528 995 B1**
(45) Veröffentlichungstag und Bekanntmachung des Hinweises auf die Patenterteilung: **07.01.2015**
(21) Anmeldenummer: 11701128.8
(22) Anmeldetag: 26.01.2011
(51) Int. Cl.: C09K 21/10, C07F 9/40

(54) **N-METHYL-MELAMINIUMSALZ DES MONOMETHYLMETHANPHOSPHONSÄUREESTERS ALS FLAMMSCHUTZMITTEL**
N-METHYL-MELAMINIUM SALT OF MONOMETHYLMETHANE PHOSPHONIC ACID ESTER AS A FLAME RETARDANT
SEL DE N-MÉTHYL-MÉLAMINE DE L'ESTER D'ACIDE MONOMÉTHYL-MÉTHANE-PHOSPHONIQUE SERVANT D'AGENT IGNIFUGEANT

(30) Priorität: 27.01.2010 EP 10151845
(43) Veröffentlichungstag der Anmeldung: 05.12.2012
(73) Patentinhaber: Ecoatech GmbH, 86167 Augsburg (DE)
(72) Erfinder: NIEDERSTADT, Rule, 86157 Augsburg (DE)
(74) Vertreter: Reitstötter Kinzebach
(86) Internationale Anmeldenummer: PCT/EP2011/051051
(87) Internationale Veröffentlichungsnummer: WO 2011/092194

(56) Entgegenhaltungen:
- EP-A1- 0 363 321
- US-A- 4 714 724
- US-B1- 6 270 694
- TROEV K ET AL: "INTERACTION BETWEEN 2,4,6-TRIAMINO-1,3,5-TRIAZINE AND ALKYL ESTERS OF PHOSPHONIC AND PHOSPHORUS ACIDS", PHOSPHORUS, SULFUR AND SILICON AND THE RELATED ELEMENTS, TAYLOR & FRANCIS, US, Bd. 133, 1. Januar 1998 (1998-01-01), Seiten 61-68, XP000946407, ISSN: 1042-6507 in der Anmeldung erwähnt

## Beschreibung

Die vorliegende Erfindung betrifft die Verwendung des N-Methyl-Melaminiumsalzes des Monomethylmethanphosphonsäureesters als Flammschutzmittel.

Stickstoff- und Phosphor-basierte Flammschutzmittel sind bereits seit langem bekannt. So beschreibt die DE 21 31 040 Melamin-N-alkylphosphonsäureester, die sich zur Flammfestausrüstung von Textilien eignen.

Die EP 466 137 A2, WO 97/39053 und WO 99/02606 beschreiben Salze von phosphorhaltigen Säuren, wie Phosphinsäuren, Phosphonsäuren und Phosphorsäure, mit Melamin und Melaminkondensationsprodukten. Diese Salze werden zur Flammfestausrüstung von Textilien und Polymeren eingesetzt. Die WO 01/57051 betrifft ein Flammschutzmittel für thermoplastische Polyamide, das ein Gemisch aus Melamincyanurat und einer organischen Phosphorverbindung mit wenigstens 14 Gew.-% Phosphor umfasst. Die WO 2009/015772 beschreibt unter anderem Salze von Polyammoniumphosphonaten mit Melaminiumsalzen und Salzen von Melaminiumderivaten und deren Verwendung als Flammschutzmittel.

Die EP 363 321 A1 offenbart das Methylphosphonsäure-Melaminiumsalz und das Monomethylmethanphosphonsäure-Melaminiumsalz zur Verwendung als Flammschutzmittel. Die Schmelzpunkte der Salze sind mit > 250 °C bzw. > 230 °C angegeben. Die Nacharbeitung durch den Anmelder hat jedoch deutlich niedrigere, unscharfe Schmelzpunkte von knapp oberhalb 200 °C ergeben (vgl. die beigefügten Ausführungsbeispiele).

Da viele Polymere im Temperaturbereich von 200 bis 250°C verarbeitet, z. B. versponnen, extrudiert oder spritzgegossen, werden, ist es entscheidend, dass die mitverwendeten Flammschutzmittel keine Schmelz- oder Zersetzungsreaktionen in diesem Temperaturbereich zeigen. Flammschutzmittel mit höheren Schmelzpunkten sind vielfältiger einsetzbar.

Wasserlösliche Flammschutzmittel sind wünschenswert, da sie aus wässriger Flotte z.B. auf Textilien aufgebracht werden können.

Troev, K. und Tsevi, R. beschreiben in Phosphourus, Sulfur and Silicon, 1998, Vol. 133, S. 61-68 die Umsetzung von Melamin mit Alkylestern von Phosphon- und Phosphorsäuren. Die Autoren behaupten, das Methylmelaminiumkation (CH₃NH₂⁺-C₃H₄N₄) spalte teilweise formal Carben (CH₂) ab unter Bildung des Melaminiumkations (H₃N⁺-C₃H₄N₄). Die Carben-Abspaltung konnte von dem Anmelder nicht bestätigt werden.

Der vorliegenden Erfindung liegt daher die Aufgabe zugrunde, ein Flammschutzmittel mit definiertem hohen Schmelzpunkt und guter Wasserlöslichkeit zur Verfügung zu stellen. Insbesondere soll dieses Flammschutzmittel einfach und mit geringen Kosten herstellbar sein. Außerdem soll es universell für eine breite Palette von flammfest auszurüstenden Materialien einsetzbar sein und hohe Wirksamkeit aufweisen.

Die obige Aufgabe wird durch die Verwendung des N-Methyl-Melaminiumsalzes des Monomethylmethanphosphonsäureesters als Flammschutzmittel gelöst.

Das N-Methyl-Melaminiumsalz des Monomethylmethanphosphonsäureesters weist die Formel I auf 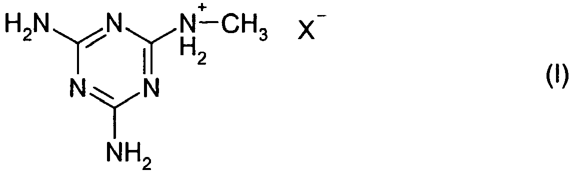 worin X- für 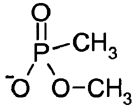 steht.

Das erfindungsgemäß verwendete N-Methyl-Melaminiumsalz ist ein effektives Flammschutzmittel auf Stickstoffbasis. Die Wirksamkeit ist insbesondere auf den hohen Gehalt an Stickstoff und Phosphor zurückzuführen..

Die Herstellung des erfindungsgemäß verwendeten N-Methyl-Melaminiumsalzes erfolgt gemäß dem nachfolgenden Rektionsschema 1 durch Umsetzung von Melamin mit Dimethylmethylphosphonat (DMMP):

### Reaktionsschema 1:

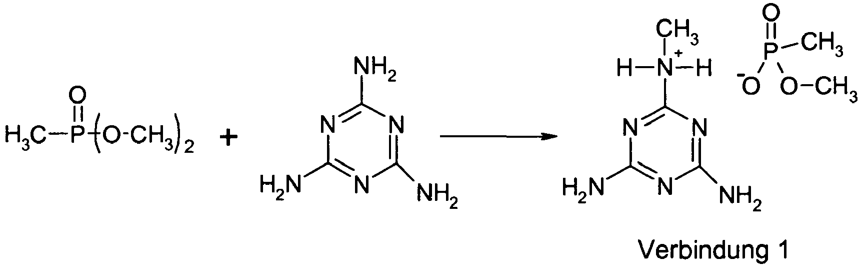

Da Melamin ein Feststoff ist, wird die Umsetzung in einem Lösungsmittel durchgeführt. Dabei kann es sich um ein inertes organisches Lösungsmittel handeln, beispielsweise einen chlorierten Kohlenwasserstoff, wie Trichlorethan, ein Keton, wie Aceton, einen Ether, wie Tetrahydrofuran oder Dioxan, oder Dimethylsulfoxid.

Vorzugsweise erfolgt die Umsetzung jedoch in Substanz, d. h. in Abwesenheit eines externen Lösungsmittels, bei erhöhter Temperatur. Dabei verwendet man das Dimethylmethylphosphonat (DMMP), als Lösungsmittel. Das DMMP ist eine im Handel erhältliche Verbindung. Zweckmäßigerweise verwendet man das DMMP in einem molaren Überschuss im Bereich von 2:1 bis 50:1, insbesondere 5:1 bis 20:1. Das Melamin ist in DMMP bei niedrigen Temperaturen, wie Raumtemperatur bis 50° C, im Wesentlichen nicht löslich. Man erhitzt daher das Reaktionsgemisch auf circa 120°-180°C solange bis sich das Melamin vollständig aufgelöst hat. Anschließend erhitzt man noch mindestens 15 Minuten, zweckmäßigerweise 20 Minuten bis 2h bis zur Siedetemperatur des DMMP bei 180°C. Das Reaktionsprodukt ist selbst bei dieser Temperatur in DMMP nicht löslich und fällt aus.

Es hat sich gezeigt, dass bei dieser Reaktion nur eine Methylgruppe auf ein Molekül Melamin übertragen wird. Es bildet sich ein stöchiometrisches Salz aus dem N-Methyl-Melaminium-Kation und dem Anion des Methanphosphonsäuremonomethylesters.

Das Salz aus dem N-Methyl-Melaminium-Kation und dem Anion des Methanphosphonsäuremonomethylester ist gut wasserlöslich.

Die erfindungsgemäße verwendete Verbindung kommt als Flammschutzmittel in flüssiger oder fester Form zur Anwendung. Bei Flammschutzmitteln in flüssiger Form liegt die erfindungsgemäß verwendete Verbindung im Allgemeinen in gelöster oder suspendierter Form vor. Als Lösungsmittel ist, je nach Anwendungszweck, Wasser oder ein organisches Lösungsmittel brauchbar. Das Flammschutzmittel kann übliche Zusätze und gegebenenfalls auch weitere Komponenten mit Flammschutzwirkung enthalten. Übliche Zusätze sind beispielsweise UV-Stabilisatoren, Trennmittel, Fließmittel, Weichmacher, Gleitmittel, Dispergiermittel, Schaumbildner, Antidripping-Mittel, Metallhydroxide, Metallborate, Tonmineralien, Farbstoffe und / oder Pigmente.

Die erfindungsgemäß verwendete Verbindung ist insbesondere geeignet für textile Anwendungen, Einarbeitung in Kunststoffe und Imprägnierung von nicht textilen Materialen.

Für die textile Anwendung kommen nicht zu waschende Textilien, wie Dekorationsstoffe, Teppiche, Vorhänge, Dachhimmel, Einlagestoffe etc., ebenso in Frage, wie zu waschende Textilien, beispielsweise Möbelbezugsstoffe, Arbeitskleidung, Bettwäsche, Kissenbezüge etc.

Zur Verbesserung der Waschbeständigkeit kann das Produkt auch mit Formaldehyd umgesetzt werden, um reaktive Methylolgruppen zu erzeugen. Diese können eine Bindung zwischen dem Flammschutzmittel und der Oberfläche der Textilien herstellen. Durch Kondensation mit dem erfindungsgemäßen Flammschutzmittel und der Baumwolle entsteht eine kovalente Bindung mit dem Textil. Weitere geeignete Vernetzer sind Di- oder Polyisocyanate und chlorierte Triazinderivate.

Das Flammschutzmittel kann durch übliche Verfahren auf Textilien aufgebracht werden, beispielsweise durch das Tauch-Quetschverfahren, für das ein gut wasserlösliches Melaminderivat erforderlich ist, um eine hohe Flottenkonzentration zu erzielen und die bei der Trocknung zu entfernende Wassermenge gering zu halten. Von besonderem Vorteil ist hierbei die geringe Hygroskopizität der erfindungsgemäß verwendeten Verbindung im Vergleich mit anderen salzartigen Flammschutzmitteln. Außerdem ist eine hohe Effizienz des Flammschutzmittels wesentlich, um den Produktauftrag zu minimieren.

Eine weitere Möglichkeit zum Aufbringen des Flammschutzmittels auf Textilien besteht darin, dass man es in eine Beschichtungspaste einarbeitet, welche dann in bekannter Weise einseitig mittels Rakel auf das Textil aufgetragen wird.

Das Flammschutzmittel wird üblicherweise in einer Menge im Bereich von 5 bis 25 Gew.-%, bezogen auf das Flächengewicht der Textilien, aufgetragen.

Zur Flammfestausrüstung von Kunststoffen kann das erfindungsgemäße Flammschutzmittel nach üblichen Verfahren in die Kunststoffe eingearbeitet oder einpolymerisiert werden. Die Einarbeitung in thermoplastische Kunststoffe erfolgt zweckmäßiger Weise mit Hilfe eines Extruders. Hierbei sind auf Grund des hohen Schmelzpunktes der erfindungsgemäß verwendeten Verbindungen Verarbeitungstemperaturen von bis zu 260°C möglich. Industriell werden viele thermoplastische Polymere bei Temperaturen von 240-260°C verarbeitet um die mechanischen Eigenschaften der Schmelze vorteilhaft zu gestalten, wie z. B. eine niedrige Schmelzviskosität. Dies trifft auch zu für Polymere, deren Erweichungsbereich deutlich unterhalb von 200°C liegt, wie z. B. Polyolefine. Es ist daher für die industrielle Verarbeitung von besonderem Interesse, den Schmelzpunkt der Additive oberhalb der üblichen Verarbeitungstemperaturen zu halten. Beim Einsatz der erfindungsgemäß hergestellten Verbindung erfolgt kein Sieden oder Verdampfen des Flammschutzmittels und es wird keine Vergilbung der Polymermatrix bewirkt. Diese Eigenschaft in Kombination mit der hohen Phosphor- und Stickstoffkonzentration im Molekül erklärt die besondere Bedeutung der Erfindung gegenüber bekannten Schmelzadditiven.

Die modifizierte Schmelze kann zu verschiedenen Produkten wie zum Beispiel Fasern, Filamenten, Folien, Spritzguss-, Blasform- oder Extrusionsartikeln weiterverarbeitet werden. Geeignete Verarbeitungstechniken sind Schmelzspinnen, Spritzgiessen, Mehrkomponenten-Spritzgiessen, Extrusion, Coextrusion, Blasformen, Tiefziehen. In einer bevorzugten Ausführungsform wird der thermoplastische Kunststoff zu flammhemmenden Filamenten oder Spinnfasern verarbeitet, die zu Textilien weiterverarbeitet werden können.

Kunststoffe, die mit den erfindungsgemäßen Flammschutzmitteln ausgerüstet werden können, sind beispielsweise:
Polyolefine, wie Polyethylen (HDPE, LLDPE und LDPE), Polypropylen, Polybuten, Polystyrol, Acrylnitril-Butadien-Styrol-Copolymere etc.
Thermoplastische Polyurethane
Epoxidharze,
Polyamide, wie Polyamid 4, Polyamid 6, Polyamid 11, Polyamid 12, Polyamid 6/6, 4/6, 6/10, 6/12 etc., Polycaprolactam etc., Polyimide, Polyetherimide, Polyesterimide, Polyharnstoffe etc.
Polyacrylate, Polymethacrylate, Polyacrylamide, Polyacrylnitrile, etc.
Polyvinylalkohol, Polyvinylacetat, Polycarbonate, Polyestercarbonate, Polyacetale,
Polyalkylenglykole bzw. Polyalkylenoxide, wie Polyethylenoxide, Polypropylenoxide etc.
Duroplaste, wie PF, MF oder UF,
Phenoxyharze oder Wood-Plastic-Composites
sowie Copolymere und Mischungen dieser Polymere.

Als nicht textile Anwendung kommt insbesondere die Ausrüstung von Holz, Spanplatten, Faserplatten und Papier in Frage. Die Flammschutzmittel können in die Pulpe, Zellstoffmasse oder im Extruder eingearbeitet werden. Die Einarbeitung in Holz erfolgt durch Imprägnieren mit den Flammschutzmitteln in Form einer wässrigen Lösung unter Atmosphärendruck oder Überdruck.

Die Konzentration der erfindungsgemäßen Melaminderivate in dem flammfest auszurüstenden Material liegt im Falle von Kunststoffen im Bereich von 0,1 bis 30 Gew.-% bevorzugt jedoch im Bereich von 3 bis 8% um die mechanischen Eigenschaften der Polymere nicht zu verschlechtern. Das Flammschutzmittel kann auch in Form eines Masterbatch bereitgestellt werden, in dem das Flammschutzmittel in höherer Konzentration enthalten ist als die beabsichtige Konzentration im fertigen Produkt. Der Masterbatch wird dann in die Schmelze des auszurüstenden Kunststoffs eingearbeitet. Im Falle von Holz und Papier liegt die erforderliche Konzentration im Bereich von 0,1 bis 40 Gew.%.

Die beigefügten Figuren und die nachfolgenden Beispiele erläutern die Erfindung ohne sie zu begrenzen.
Fig. 1 zeigt die Kurve der thermogravimetrischen Analyse (TGA) des Produkts von Beispiel 1.
Fig. 2 zeigt die TGA-Kurve des Produkts von Vergleichsbeispiel 2.

Thermogravimetrische Analysen wurden im Temperaturbereich von 25 bis 600 °C auf einem TGA Q500 der Firma TA Instruments durchgeführt.

### Beispiel 1: Umsetzung von Melamin mit Dimethylmethylphosphonat (DMMP)

Man legt 581,61 g DMMP in einem Dreihals-Rundkolben mit Rührvorrichtung und Sumpfthermometer vor und gibt dann unter Rühren nach und nach 28,96 g Melamin in kleinen Portionen zu. Nach beendeter Melaminzugabe erhitzt man das Reaktionsgemisch auf circa 190°C und hält diese Temperatur konstant, wobei das DMMP am Rückfluss siedet. Nach wenigen Minuten beginnt sich ein dicker weißer Niederschlag zu bilden, der im Laufe der Zeit stark zunimmt. Nach ca. 30 Minuten bricht man die Reaktion ab und lässt man die Suspension abkühlen. Der Niederschlag wird bei circa 130°C abgenutscht und nach dem Abkühlen drei- bis viermal mit kleinen Portionen Aceton gewaschen wird. Nach Trocken bei circa 60°C erhält man 40,51 g (81 %) N-Methylmelaminium-Methylmethanphosphonat (Verbindung 1).

Zersetzungstemperatur von 268°C ermittelt durch DSC Messung;
¹H-NMR Spektrum: 0.9 ppm (3H Dublett; P-CH₃); 3.3 ppm (3H Dublett; OCH₃);
3,4 ppm (3H Singulett; N-CH₃); 8.4 (4H; NH₂); 7.4 ppm (2H; NH₂⁺).
¹³C-NMR-Spektrum (ppm; d₆-DMSO): 10 (d, CH₃-P); 33 (s, OCH₃); 158 und 163 (=C-).
Elementaranalyse: [P] =11,2%, [N]= 32,8%, [C]= 26,9%

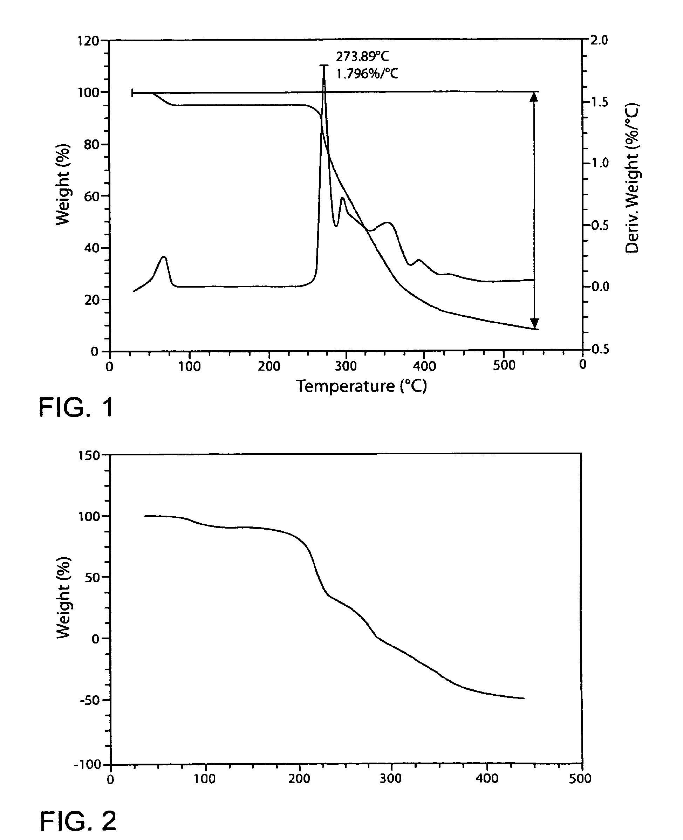

Die TGA-Kurve von Verbindung 1 ist in Fig. 1 dargestellt.

### Beispiel 2: Herstellung einer wässrigen Lösung von Verbindung 1

Man legt 1,44 mol DMMP (178,67 g) in einem 2L-Dreihals-Rundkolben mit Rührvorrichtung und Sumpfthermometer vor. Unter Rühren werden 1,44 mol Melamin (181,61 g) hinzugegeben und anschließend auf 180 °C aufgeheizt. Der Rückflusskühler wird auf 15 °C temperiert um sicherzustellen, dass kein DMMP entweicht. Man erhitzt so lange bis die Mischung fest wird und der Rührer ins Stocken gerät. Der Rührer und das Ölbad werden abgeschaltet und man gießt durch den Rückflusskühler vorsichtig Wasser hinzu bis zu einer Gesamtmenge von 610 g. Nach ca. 10 Minuten schaltet man den Rührer wieder ein und lässt den Ansatz noch ca. 15 Minuten im Wasser sieden. Die festen Bestandteile lösen sich im siedenden Wasser vollständig auf. Die Wasserlöslichkeit von Verbindung 1 bei 25 °C und 90 °C ist in Tabelle 1 angegeben.

### Beispiel 3: Wässrige Beschichtungspaste

Man verwendet ein 1 L Becherglas, einen Metallrührer (kreuzförmig) und eine Heizplatte. Man wiegt 689,5 g einer 30%igen wässrigen Lösung von Verbindung 1 ein und erhitzt die Lösung auf ca. 90 °C. Anschließend werden zügig und unter kräftigem Rühren 164,5 g einer 55%igen Ammoniumpolyphosphat-Lösung zugegeben. Es fällt ein weißer voluminöser Niederschlag aus. Beim Erkalten der Dispersion bildet sich ein fester quarkartiger Niederschlag. Der Niederschlag kann mit Hilfe eines Ultra Turrax in eine pastenartige Form umgewandelt werden. Man homogenisiert den Ansatz bei hoher Drehzahl (10-15.000 Touren) ca. 2 Minuten und erhält eine viskose Masse, die nicht mehr tropft aber unter Druck noch ausreichend fließfähig und pumpbar ist. Homogenisiert man den Ansatz nicht, so kann man durch Filtration, mehrmaliges Nachspülen mit Wasser und trocknen ein weißes Pulver mit einem Trockengewicht von 298,1 g erhalten. Der Niederschlag besitzt noch Anhaftungen von Methylmethanphosphonat und Ammonium-ionen und sollte laut der Theorie ein Trockengewicht von 282,7 g besitzen.

### Beispiel 4: Textilausrüstung durch Tauch-Quetsch-Verfahren

Die Verbindung 1 wird gemäß Beispiel 1 oder 2 hergestellt. Man verwendet eine 25%ige Konzentration des Produktes in Wasser. Die Flammfestausrüstung wird in üblicher Weise über ein Tauch-Quetsch-Verfahren (Foulardauftrag) auf das Textil so aufgebracht, dass die Flottenaufnahme 80-120% beträgt. Die Trocknung erfolgt bei Temperaturen zwischen 120-160 °C. Die Flammfestausrüstung ist ausreichend zum Erreichen der häufig vorgeschriebenen Norm DIN 4102 B2. Die Ausrüstung ist nicht waschpermanent aber besitzt den Vorteil gegenüber anderen Flammschutzmitteln wenig korrosive Eigenschaften zu besitzen. Dadurch rosten Metallteile und Klammern zur Befestigung der Stoffe (beispielsweise bei Möbelbezugstoffen, Stühlen, Hocker) weniger schnell. Als Textilien zur Flammschutzbehandlung eignen sich Waren bestehend aus Baumwolle, Zellulose-Regenerat, Polyolefinen, Polyester, Wolle sowie Mischungen der genannten Fasern.

### Beispiel 5: Flammfestausrüstung von Polyamid

Die Verbindung 1 wird in Form eines fein verteilten Pulvers gemeinsam mit Polyamid 6 in eine elektrisch beheizbare Extruderschnecke eingebracht. Es ist darauf zu achten, dass die Schmelze nicht über 260 °C erwärmt wird. Nach Aufheizen und guter Durchmischung von Polymer und Verbindung 1 in der Schmelze kann die fließfähige Schmelze zu Filmen, Vliesen, Fasern oder Laminat verarbeitet werden. Je nach Anwendung wird das Flammschutzmittel in Konzentrationen von 3-8 Gew.-% in die Schmelze eingebracht.

### Vergleichsbeispiel 1:

Methylphosphonsäure-Melaminiumsalz wurde durch Umsetzung von Methylphosphonsäure mit Melamin gemäß Beispiel 1 der EP 363 312 A1 hergestellt. Seine Wasserlöslichkeit bei 25 °C und 90 °C ist in Tabelle 1 angegeben.

### Vergleichsbeispiel 2:

Das Monomethylmethanphosphonsäure-Melaminiumsalz wurde durch Umsetzung von Monomethylmethanphosphonsäureester mit Melamin gemäß Beispiel 3 der EP 363 312 A1 hergestellt. Seine Wasserlöslichkeit bei 25 °C und 90 °C ist in Tabelle 1 angegeben. Seine TGA-Kurve ist in Fig. 2 dargestellt.

**Tabelle 1: Wasserlöslichkeit von Melaminsalzen**

| | Bei 25°C | Bei 90°C |
|---|---|---|
| Verbindung 1 | 27,5% | 45,6% |
| Vergleichsbeispiel 1 | 1,6% | 28% |
| Vergleichsbeispiel 2 | <1% | 50,7% |

### Vergleichsbeispiel 3

Eine Lösung von Verbindung 1 in DMSO wurde 20 h auf 170 °C erhitzt. Der Feststoff wurde isoliert und ein ¹H-NMR-Spektrum in UMSO aufgenommen. Im ¹H-NMR-Spektrum betrug das Flächenverhältnis des N-CH₃-Peaks (1,3 ppm/d) zu dem P-OCH₃-Peak (3,3 ppm/d) exakt 3:3. Diese Beobachtung widerspricht einer Carben-Abspaltung wie von Troev, K. und Tsevi, R. beschreiben in Phosphourus, Sulfur and Silicon, 1998, Vol. 133, S. 61-68 postuliert.

## Patentansprüche

1. Verwendung des N-Methyl-Melaminiumsalzes des Monomethylmethanphosphonsäureesters als Flammschutzmittel.

2. Verwendung nach Anspruch 1 zur Flammfestausrüstung von Textilien.

3. Verwendung nach Anspruch 1, wobei das Flammschutzmittel in einen thermoplastischen Kunststoff eingearbeitet wird.

4. Verwendung nach Anspruch 3, wobei es sich bei dem thermoplastischen Kunststoff um ein Polyolefin oder ein Polyamid handelt

5. Verwendung nach Anspruch 3 oder 4, wobei man 3 bis 8 Gew.-%, bezogen auf den thermoplastischen Kunststoff, N-Methyl-Melaminiumsalz des Monomethylmethanphosphonsäureesters zusetzt.

6. Verwendung nach einem der Ansprüche 3 bis 5, wobei der thermoplastische Kunststoff zu Filamenten oder Spinnfasern verarbeitet wird.

7. Verwendung nach Anspruch 1 zur Imprägnierung von nicht textilen Materialen.

## Claims

1. The use of the N-methylmelaminium salt of the monomethyl methanephosphonate ester as a flame retardant.

2. The use according to Claim 1 for conferring flame retardancy on textiles.

3. The use according to Claim 1 wherein the flame retardant is incorporated into a thermoplastic material.

4. The use according to Claim 3 wherein the thermoplastic material is a polyolefin or a polyamide.

5. The use according to Claim 3 or 4 wherein from 3% to 8% by weight, based on the thermoplastic material, is added of the N-methylmelaminium salt of the monomethyl methanephosphonate ester.

6. The use according to any of Claims 3 to 5 wherein the thermoplastic material is processed into filaments or staple fibres.

7. The use according to Claim 1 for impregnating non-textile materials.

## Revendications

1. Utilisation du sel de N-méthyl-mélaminium de l'ester monométhylique de l'acide méthanephosphonique en tant qu'agent ignifugeant.

2. Utilisation selon la revendication 1, pour l'ignifugation de textiles.

3. Utilisation selon la revendication 1, dans laquelle l'agent ignifugeant est incorporé dans un plastique thermoplastique.

4. Utilisation selon la revendication 3, dans laquelle le plastique thermoplastique est une polyoléfine ou un polyamide.

5. Utilisation selon la revendication 3 ou 4, dans laquelle 3 à 8 % en poids, par rapport au plastique thermoplastique, de sel de N-méthyl-mélaminium de l'ester monométhylique de l'acide méthanephosphonique est ajouté.

6. Utilisation selon l'une quelconque des revendications 3 à 5, dans laquelle le plastique thermoplastique est transformé en filaments ou fibres discontinues.

7. Utilisation selon la revendication 1, pour l'imprégnation de matériaux non textiles.
